# EUROPÄISCHE PATENTSCHRIFT

(11) **EP 2 782 441 B1**
(45) Veröffentlichungstag und Bekanntmachung des Hinweises auf die Patenterteilung: **22.03.2017**
(21) Anmeldenummer: 12788579.6
(22) Anmeldetag: 23.11.2012
(51) Int. Cl.: A23C 19/068, B29C 47/66, B29C 47/38, B30B 11/24, A01J 25/00

(54) **EINSCHNECKENEXTRUDER UND VERFAHREN ZUM HERSTELLEN EINES PLASTIFIZIERTEN LEBENSMITTELPRODUKTES**
SINGLE-SCREW EXTRUDER AND METHOD FOR PRODUCING A PLASTICIZED FOOD PRODUCT
EXTRUDEUSE MONOVIS ET PROCÉDÉ POUR FABRIQUER UN PRODUIT ALIMENTAIRE PLASTIFIÉ

(30) Priorität: 23.11.2011 DE 102011086981
(43) Veröffentlichungstag der Anmeldung: 01.10.2014
(73) Patentinhaber: Helix GmbH, 71364 Winnenden (DE); Universität Hohenheim, 70599 Stuttgart (DE)
(72) Erfinder: HINRICHS, Jörg, 70599 Stuttgart (DE); MIGLIORE, Giovanni, 72141 Walddorfhäslach (DE); BÄHLER, Balz, 70599 Stuttgart (DE); WEINBRENNER, Armin, 71566 Althütte (DE)
(74) Vertreter: Patentanwälte Ruff, Wilhelm, Beier, Dauster & Partner mbB
(86) Internationale Anmeldenummer: PCT/EP2012/073446
(87) Internationale Veröffentlichungsnummer: WO 2013/076237

(56) Entgegenhaltungen:
- EP-B1- 2 168 429
- WO-A1-2011/026542
- DE-A1- 10 130 759
- DE-A1- 10 206 484
- DE-A1-102008 026 969
- GB-A- 742 662
- US-A- 5 939 124

## Beschreibung

Die Erfindung betrifft einen Einschneckenextruder zum kontinuierlichen Fördern und Plastifizieren eines Ausgangsmaterials mit einer Schnecke, mit einem Extruderzylinder, der die Schnecke aufnimmt und - in Förderrichtung der Schnecke gesehen - eingangsseitig einen Einzugbereich sowie ausgangsseitig einen Austrittsbereich umfasst, sowie mit wenigstens einer Temperiereinrichtung, die wenigstens einem Teilabschnitt des Extruderzylinders zum Heizen oder Kühlen eines zugeordneten Zylinderraumes zugeordnet ist.

Die Erfindung betrifft zudem ein Verfahren zum Herstellen eines plastifizierten Lebensmittelproduktes, insbesondere eines Pasta-Filata-Käses, vorzugsweise Mozzarella, mittels eines Einschneckenextruders.

Ein derartiger Einschneckenextruder sowie ein Verfahren zum Herstellen von Mozzarella sind aus der DE 10 2008 026 969 A1 bekannt. Der Einschneckenextruder umfasst einen Extruderzylinder sowie eine nicht näher beschriebene, in dem Extruderzylinder verlaufende Förderschnecke. Zur Herstellung von Mozzarella wird ein Vorprodukt in dem Extruderzylinder mit einer Kochsalzlösung versetzt, die dem Zylinderraum des Extruderzylinders zugeführt wird. Der Extruderzylinder wird auf eine bevorzugte Temperatur von 40°C oder mehr erhitzt. Ausgangsseitig ist der Extruderzylinder mit einer doppelwandig ausgeführten Extruderdüse versehen, durch die das Käseprodukt austritt.

Die EP 21 68 429 B1 offenbart einen Zweischneckenextruder, mit dem Mozzarella hergestellt werden kann. Auch bei diesem Verfahren wird eine Kochsalzlösung dem Käseprodukt direkt im Extruder zugeführt.

Ein Einschneckenextruder gemäss dem Oberbegriff von Anspruch 1 ist aus DE 10130759 bekannt. Aufgabe der Erfindung ist es, einen Einschneckenextruder sowie ein Verfahren zum Herstellen eines plastifizierten Lebensmittelproduktes zu schaffen, die eine besonders produktschonende Behandlung und Verarbeitung eines Ausgangsmaterials ermöglichen.

Diese Aufgabe wird für den Einschneckenextruder mit den Merkmalen des Anspruchs 1 gelöst. Die Kombination der einfachen Schnecke, die das plastifizierte Material druckschonend durch den Extruderzylinder fördert, zusammen mit den am Innenmantel des Extruderzylinders vorgesehenen Wendelnuten ermöglicht eine besonders schonende Verarbeitung eines Ausgangsmaterials. In besonders vorteilhafter Weise kann durch die Kombination aus Schnecke und Wendelnuten im Extruderzylinder eine besonders gute und schonende Mischung des Ausgangsmaterials mit Zutaten sowie eine Streckung der im Extruderzylinder plastifizierten Masse erzielt werden. Dadurch ist der erfindungsgemäße Einschneckenextruder besonders vorteilhaft für die kontinuierliche und industrielle Herstellung plastifizierter Lebensmittelprodukte, insbesondere eines Pasta-Filata-Käses, geeignet. Als Ausgangsmaterial hierfür dient eine Protein-Fett-Matrix, insbesondere ein Cagliata, der vorzugsweise in gleichmäßig zerkleinerter Form dem Einzugbereich des Extruderzylinders zugeführt wird. Erfindungsgemäß ist die Schnecke in ihrer Schneckengeometrie derart gestaltet, dass das Ausgangsmaterial in plastifiziertem Zustand zumindest weitgehend druckkonstant durch den Extruderzylinder gefördert wird. Dies bedeutet, dass der geförderte, plastifizierte Materialstrang sich über die gesamte Länge des Förderwegs durch den Extruderzylinder hindurch in etwa gleichem Druckniveau befindet. Dadurch, dass der Materialstrang während der Förderung keiner Druckerhöhung unterliegt, ergibt sich die äußerst schonende Strukturänderung des plastifizierten Materialstrangs. Im Idealfall ermöglicht die erfindungsgemäße Lösung eine adiabatische Strukturänderung des Materialstrangs, so dass für eine Mozzarella-Herstellung ein Mozzarella erzeugt werden kann, der qualitativ einem von Hand hergestellten Mozzarella entspricht.

An die Schnecke schliesst ein mit der Schnecke koaxialer und drehfester Dehnschneckenabschnitt an, der wendelförmig über seinen Umfang verteilt mechanische Strangteilmittel zum Aufteilen des durch die Schnecke geförderten, plastifizierten Materialstrangs in Teilstränge, sowie mechanische Materialleitbereiche zum Beschleunigen und Abbremsen der Teilstränge und mechanische Vereinigungsabschnitte umfasst, in denen die Teilstränge wieder zusammengeführt werden. Die Strangteilmittel, die Materialleitbereiche und die Vereinigungsabschnitte sind vorteilhaft nach außen abragend auf einem sich im Betrieb drehenden Schneckenkern des Dehnschneckenabschnitts vorgesehen, wobei die genannten Elemente vorzugsweise einstückig von dem Schneckenkern aus radial nach außen abragen. Der Extruderzylinder umfasst einen Zylinderabschnitt, der sich über den Dehnschneckenabschnitt hinaus fortsetzt und demzufolge den Dehnschneckenabschnitt umgibt.
In weiterer Ausgestaltung der Erfindung ist in Förderrichtung des Materialstrangs an den Dehnschneckenabschnitt ein Temperierabschnitt zum Temperieren, insbesondere zum Kühlen, des von dem Dehnschneckenabschnitt geförderten Materialstrangs angefügt. Dieser Temperierabschnitt dient zum abschließenden Temperieren oder Kühlen des fertigen, aus dem Dehnschneckenabschnitt austretenden Materialstrangs. Der Temperierabschnitt stellt vorzugsweise einen Zylinder dar, der koaxial an den Extruderzylinder anschließt.

In Ausgestaltung der Erfindung ist die Schnecke durch einen Schneckenkern sowie ein gleichmäßig über die Länge und den Umfang des Schneckenkerns verteiltes Schneckengewinde gebildet, das mit einem oder mehreren Schneckengängen versehen ist, wobei jeder Schneckengang bündig an die Innenmantelfläche des Extruderzylinders herangeführt ist. Der Schneckenkern kann zumindest abschnittsweise konisch verjüngt, konisch erweitert und/oder zylindrisch gestaltet sein. Das Schneckengewinde ist einteilig mit dem Schneckenkern gestaltet, vorzugsweise in einem einstufigen Herstellungsvorgang. Der Außendurchmesser des Schneckengewindes ist wenige Zehntel Millimeter kleiner als ein Innendurchmesser des Zylinderraumes des Extruderzylinders. Der Schneckenkern ist über seine Länge konstant oder variabel gestaltet und kann insbesondere dem Schneckengewinde schrauben- oder wendelartig folgen. Die Länge des Schneckenkerns und des Schneckengewindes in Förderrichtung entspricht in etwa der Länge des Zylinderraumes. Der Außendurchmesser des Schneckengewindes ist so gewählt, dass das Schneckengewinde sich im Zylinderraum zwar berührungslos zur Wandung des Zylinderraumes drehen kann, dass aber gleichzeitig ausreichend große Scherkräfte auf das Ausgangsmaterial bei einer Drehung des Schneckengewindes übertragen werden können. Ein Drehsinn des Schneckengewindes ist insbesondere gegensinnig zu dem Drehsinn der Wendeln der Nuten an der Innenwandung des Extruderzylinders vorgesehen.

In weiterer Ausgestaltung der Erfindung verlaufen die Nuten wendelförmig über die Innenmantelfläche des Extruderzylinders, wobei die Wendeln der Nuten insbesondere gegensinnig zu einem Drehsinn der Schnecke verlaufen. Hierdurch kann eine besonders gute Streckung des plastifizierten Materials erreicht werden.

In weiterer Ausgestaltung der Erfindung sind mehrere parallel verlaufende Nuten an der Innenmantelfläche des Extruderzylinders vorgesehen. Die mehreren, wendelförmig parallel verlaufenden Nuten an der Innenwandung des Zylinderraumes des Extruderzylinders ermöglichen eine besonders gute Bearbeitung des Ausgangsmaterials in plastifiziertem Zustand.

In weiterer Ausgestaltung der Erfindung ist die Steigung der Nuten unterschiedlich zu der Steigung des Schneckenblattgewindes. Die Steigung der Nuten kann je nach Einsatzzweck größer oder kleiner sein als die Steigung des Schneckenblattgewindes. Dabei sind die Steigungen zur Längsachse der Förderschnecke und des Zylinderraumes gesehen. Dadurch, dass die Steigung der wendelförmigen Nuten unterschiedlich ist zu der Steigung des Schneckengewindes kann eine besonders gute Streckung der plastifizierten Masse innerhalb des Extruderzylinders erzielt werden.

In weiterer Ausgestaltung der Erfindung weisen die Nuten jeweils einen gerundeten Querschnitt auf. Diese Ausgestaltung trägt ebenfalls zur schonenden Verarbeitung des plastifizierten Materials bei. Zudem wird eine gute Reinigung der Nuten ermöglicht, so dass der Zylinderraum lebensmitteltechnische Anforderungen erfüllen kann. In diesem Zusammenhang kann die Innenmantelfläche des Zylinderraumes vorteilhaft dehäsiv gestaltet sein; die Oberflächenbehandlung kann durch Mikroverdichten erfolgen.

In weiterer Ausgestaltung der Erfindung sind die Schnecke, der Extruderzylinder, der Dehnschneckenabschnitt und die wenigstens eine Temperiereinrichtung derart gestaltet, dass sie zur Herstellung eines plastifizierten Lebensmittelproduktes, insbesondere eines Pasta-Filata-Käses, aus einer Protein-Fett-Matrix, insbesondere einem Cagliata-Ausgangsmaterial, einsetzbar sind. Alle Teile und Abschnitte des Einschneckenextruders sind vorzugsweise spezifisch für die Herstellung von Analogkäse oder Käse oder eines anderen Lebensmittelproduktes, insbesondere des Pasta-Filata-Käses, vorzugsweise für die Herstellung von Mozzarella, aus einer Protein-Fett-Matrix, ausgebildet.

In weiterer Ausgestaltung der Erfindung ist dem Extruderzylinder eine Vorrichtung zum Injizieren von Wasserdampf in einen Zylinderraum des Extruderzylinders zugeordnet. Die Wasserdampfinjektion gewährleistet eine zwangsläufige Erhitzung des im Extruderzylinder geförderten Materials. Die Zusetzung von Wasser zum Cagliata ist gleichzeitig notwendig für die Herstellung eines Pasta-Filata-Käses, der einen Wassergehalt von mehr als 40% aufweist. Die direkte Dampfinjektion in den Zylinderraum des Extruderzylinders ermöglicht eine wassersparende und besonders effektive Vermischung und Einbindung des Wassers in den herzustellenden Käse.

In weiterer Ausgestaltung der Erfindung ist dem Extruderzylinder wenigstens eine Vorrichtung zum Einbringen von Zutaten wie insbesondere von Salz und/oder Gewürzen, vorzugsweise in flüssigem, suspendiertem, emulgiertem oder gasförmigem Zustand, in den Zylinderraum zugeordnet. Salz wird vorzugsweise als Kochsalzlösung dem Zylinderraum zugeführt. Geeignete Zutaten sind auch Hydrokolloide, Aromen und färbende Lebensmittelstoffe.

In weiterer Ausgestaltung der Erfindung sind eine Wendelsteigung sowie eine Anzahl der Nuten, eine Dimensionierung und eine Form der Nutquerschnitte sowie eine Gestaltung des Schneckenkerns und eine Steigung und Gestaltung des Schneckengewindes relativ zu einem Durchmesser des Zylinderraumes derart aufeinander abgestimmt, dass eine Scherung der Protein-Fett-Matrix, insbesondere des Cagliata-Ausgangsmaterials, sowie eine Mischung der plastifizierten Masse mit Wasser und Zutaten sowie eine Streckung der plastifizierten Masse zu einem plastifizierten Lebensmittelprodukt, insbesondere einer Pasta-Filata-Textur, bei Beibehaltung eines im Wesentlichen konstanten Druckniveaus für die Masse während des Fördervorgangs vom Einzugbereich bis zum Austrittsbereich erfolgen kann. Dadurch ist ein qualitativ hochwertiges Lebensmittelprodukt, insbesondere ein Pasta-Filata-Käse, zerstörungsfrei und produktschonend herstellbar. Besonders vorteilhaft werden Fettverluste bei der Verarbeitung und Plastifizierung der Protein-Fett-Matrix vermieden. Durch die Dampfinjektion und Salzzufuhr ergibt sich für die Herstellung eines Pasta-Filata-Käses aufgrund der guten Mischwirkung im Extruderzylinder eine besonders homogene Einarbeitung von Wasser und Salz bei einer gleichzeitigen guten Plastifizierung des Ausgangsproduktes Cagliata.

In weiterer Ausgestaltung der Erfindung ist eine Halterung für den Extruderzylinder vorgesehen, die den Extruderzylinder in einer Funktionsstellung zu einer Horizontalen derart geneigt ausrichtet, dass der Einzugbereich höher liegt als der Austrittsbereich. Durch die Schrägstellung des Extruderzylinders ergibt sich eine besonders einfache Reinigungsfunktion. Reinigungsflüssigkeit, insbesondere eine Reinigungslauge, kann über den Einzugbereich des Extruderzylinders zugeführt werden. Durch die Neigung in Richtung des Austrittsbereiches nach unten läuft die Reinigungsflüssigkeit zwangsläufig zum Austrittsbereich und dort aus einer entsprechenden Austrittsdüse aus dem Extruderzylinder wieder heraus. Besonders vorteilhaft sind die Querschnittsformen der Nut an der Innenmantelfläche des Extruderzylinders derart auf die Neigung des Extruderzylinders zur Horizontalen abgestimmt, dass bei einem entsprechenden Reinigungsvorgang keine Reinigungsflüssigkeit in den Nuten stehen bleiben kann. Die Reinigungsflüssigkeit fließt aus den Nuten daher vollständig ab. Die dehäsive Gestaltung der Oberfläche des Zylinderraumes, d.h. der Innenmantelfläche, trägt ebenfalls dazu bei, dass keine Produktspuren an der Innenmantelfläche haften bleiben können. Hierdurch wird die gute Reinigungsfunktion unterstützt.

In weiterer Ausgestaltung der Erfindung weist die Halterung eine Verstelleinrichtung zur Verstellung einer Neigung des Extruderzylinders zur Horizontalen auf. Die Verstelleinrichtung ermöglicht die Anordnung des Extruderzylinders in unterschiedlicher Neigung. Insbesondere in Verbindung mit einer Ablaufvorrichtung oder einer Überlaufvorrichtung zum Abtrennen von Prozessflüssigkeit aus dem Zylinderraum des Extruderzylinders kann je nach Änderung der Neigung ein unterschiedlich hoher Flüssigkeitsstand von Prozessflüssigkeit im Zylinderraum erreicht werden. Hierdurch kann die Flüssigkeitsaufnahme und der Flüssigkeitsgehalt des Materialstrangs beeinflusst werden.

In weiterer Ausgestaltung der Erfindung ist dem Extruderzylinder eine Überlaufvorrichtung zum Abtrennen von Flüssigkeiten aus dem Zylinderraum zugeordnet. Die Überlaufvorrichtung kann dazu dienen, überflüssige Prozessflüssigkeit aus dem Zylinderraum abzuleiten. Die Überlaufvorrichtung ist mit einem Stellelement zum Öffnen und Schließen des Überlaufes versehen. Durch wenigstens eine zusätzliche Ablaufvorrichtung ist gewährleistet, dass das plastifizierte Lebensmittelprodukt am Austrittsbereich nicht durch Wasserblasen oder ähnliche Flüssigkeitsnester beeinträchtigt ist. In vorteilhafter Weise sind mehrere Ablaufvorrichtungen über die Länge des Extruderzylinders verteilt angeordnet. Jede Ablaufvorrichtung kann vorzugsweise durch ein dem Zylinderraum zugeordnetes Ablaufsieb gebildet sein, das jeweils einen Ablauf aus dem Extruderzylinder heraus nach außen umfasst.

In weiterer Ausgestaltung der Erfindung ist eine Austrittsdüse am Austrittsbereich so gestaltet, dass sich für das austretende plastifizierte Lebensmittelprodukt eine laminare Dehnströmung ergibt. Dadurch wird das Erzielen einer qualitativ hochwertigen Textur des plastifizierten Lebensmittelproduktes in Förderrichtung nach dem Austrittsbereich weiter unterstützt.

Für das Verfahren zum Herstellen eines plastifizierten Lebensmittelproduktes, insbesondere eines Pasta-Filata-Käses, vorzugsweise Mozzarella, mittels eines Einschneckenextruders wird die der Erfindung zugrundeliegende Aufgabe durch folgende Merkmale gelöst: Eine Protein-Fett-Matrix, insbesondere Cagliata, wird in gleichmäßiger Stückgröße als Ausgangsprodukt einem Einzugbereich des Einschneckenextruders zugeführt und in einen Zylinderraum des Extruderzylinders gefördert; durch Wasserdampfinjektion wird die Protein-Fett-Matrix plastifiziert, und die plastifizierte Masse wird während der Förderung zu einem Austrittsbereich mit einer Salzlösung gemischt und zu einer Lebensmitteltextur, insbesondere einer Pasta-Filata-Textur, gestreckt, wobei die Textur auf ihrem Förderweg durch den Zylinderraum auf einen Temperaturbereich zwischen 55°C und 65°C temperiert wird und am Austrittsbereich aus dem Extruderzylinder herausgefördert wird. Erfindungsgemäß erfolgt die Förderung der plastifizierten Masse und die Gestaltung der Lebensmittel-Textur über den Förderweg ab der Plastifizierung bis zum Austrittsbereich mit zumindest weitgehend konstantem Druck auf die Masse bzw. die Lebensmittel-Textur insbesondere als Funktion von wendelförmigen Nuten an einer Innenmantelfläche des Extruderzylinders. Dadurch wird ein qualitativ hochwertiges Lebensmittelprodukt, insbesondere ein hochwertiger Pasta-Filata-Käse, vorzugsweise Mozzarella, erzielt. Durch die Dampfinjektion ergibt sich ein geringer Wasserverbrauch.

In Ausgestaltung des Verfahrens wird die plastifizierte Masse als einzelner Materialstrang kontinuierlich gefördert und in einem Teilbereich des Förderwegs in mehrere Teilstränge aufgeteilt, die Teilstränge werden durch Drehen, Beschleunigen und Abbremsen gedehnt und gestreckt, und die Teilstränge werden anschließend wieder zu einem gemeinsamen Materialstrang zusammengeführt und homogenisiert. Damit werden die Teilstränge abschließend wieder zusammengemischt. Der Teilbereich des Förderwegs, in dem diese Verfahrensschritte stattfinden, ist der Dehnstreckenabschnitt innerhalb des Extruderzylinders. Durch diese Verfahrensschritte wird eine besonders umfassende Strukturänderung des plastifizierten Materialstrangs erreicht, der für die Herstellung von Mozzarella einen äußerst hochwertigen Mozzarellastrang ergibt, dessen Qualität dem eines handgefertigten Mozzarellas entspricht.

In weiterer Ausgestaltung des Verfahrens erfolgt die Förderung des Materialstrangs und der Teilstränge in dem Teilbereich wendelförmig. Die Überlagerungen von wendelförmiger Drehung und Förderung, Aufteilung, Beschleunigung, Abbremsen und Zusammenführung, die auf den Materialstrang und die Teilstränge ausgeübt werden, führen zu der gewünschten Strukturänderung.

In weiterer Ausgestaltung des Verfahrens wird die plastifizierte Masse im Extruderzylinder bei einem Temperaturbereich zwischen 72°C und 75°C über einen Zeitraum von 15 bis 30 Sekunden pasteurisiert. Dies trägt maßgeblich zur guten Qualität insbesondere des Pasta-Filata-Käses als Endprodukt bei. Besonders vorteilhaft kann hierdurch Cagliata aus Rohmilch-Verarbeitung als Ausgangsmaterial eingesetzt werden.

In weiterer Ausgestaltung des Verfahrens werden der plastifizierten Masse Zutaten wie insbesondere Gewürze zugeführt. Alternativ oder ergänzend können Hydrokolloide, Aromen oder Lebensmittelfarbstoffe zugeführt werden.

In weiterer Ausgestaltung der Erfindung wird eine kurzzeitige Erhitzung der Masse auf eine Temperatur von ca. 85°C vorgenommen. Die kurzzeitige Erhitzung beträgt vorzugsweise wenige Sekunden. Diese Erhitzung führt zur Inaktivierung von Enzymen, die die Haltbarkeit des Lebensmittelendprodukts, insbesondere des Pasta-Filata-Käses, weiter verlängert. Zudem kann durch diese Erhitzung auch eine Inaktivierung von Hefen und Schimmelpilzen, die über Zutaten in die Masse eingebracht werden, erreicht werden.

In weiterer Ausgestaltung der Erfindung wird die Lebensmittel-Textur, insbesondere die Pasta-Filata-Textur, vor und/oder in dem Austrittsbereich vorzugsweise in einer laminaren Dehnströmung auf eine Temperatur von ca. 55°C temperiert. Die Erzeugung dieser laminaren Dehnströmung trägt zur Herstellung des Pasta-Filata-Käses mit definierter Textur und hoher Qualität bei.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Längsschnittdarstellung eine Ausführungsform eines erfindungsgemäßen Einschneckenextruders, der für die Herstellung von Mozzarella spezifiziert ist,
- Fig. 2: eine Draufsicht auf den Einschneckenextruder nach Fig. 1,
- Fig. 3: eine Längsschnittdarstellung einer weiteren Ausführungsform eines erfindungsgemäßen Einschneckenextruders zur Herstellung von Mozzarella und
- Fig. 4: eine Draufsicht auf den Einschneckenextruder nach Fig. 3.

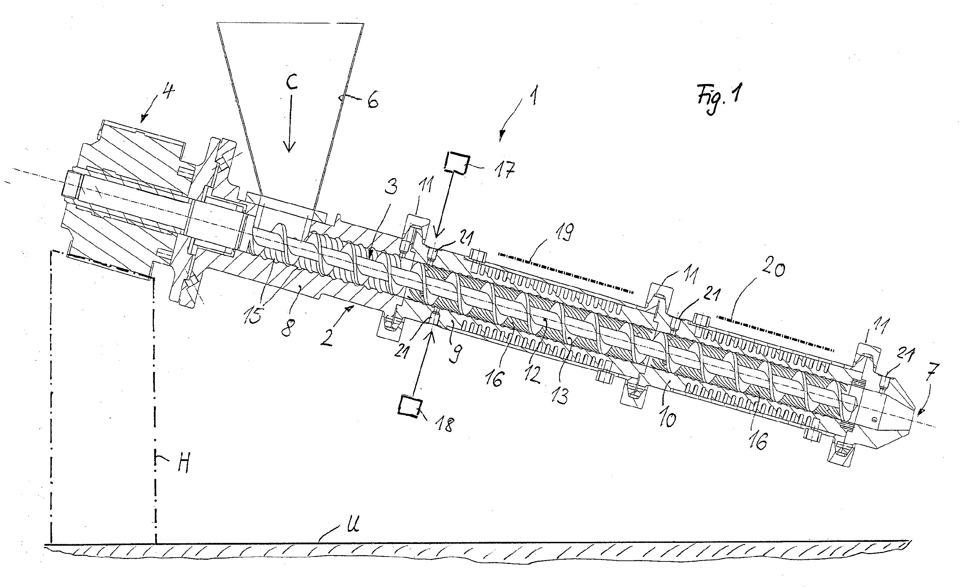

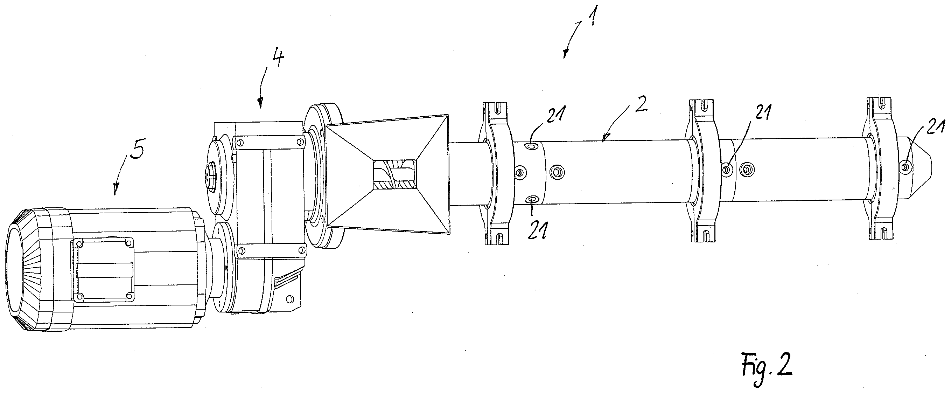

Ein Einschneckenextruder 1 nach den Fig. 1 und 2 ist für die Herstellung von Mozzarella spezifiziert. Der Einschneckenextruder 1 ist in schräger Ausrichtung zu einem horizontalen Untergrund U mittels einer Halterung H gehalten. Der Einschneckenextruder 1 umfasst einen Extruderzylinder 2 sowie eine in einem Zylinderraum des Extruderzylinders 2 angeordnete Förderschnecke 3, die eine Schnecke im Sinne der Erfindung darstellt. Die Förderschnecke 3 wird über ein Getriebe 4 durch einen Elektromotor 5 angetrieben. Der Extruderzylinder 2 ist an einer Seite - in Fig. 1 die oben liegende Seite - mit einem Einzugbereich versehen, dem ein Einführtrichter 6 zugeordnet ist. Auf einer zum Einzugbereich gegenüberliegenden Stirnseite ist der Extruderzylinder 2 mit einem Austrittsbereich 7 versehen, der gegenüber dem mit dem Einführtrichter 6 bestückten Einzugbereich - in Hochrichtung gesehen - tiefer liegt.

Der Extruderzylinder 2 ist aus drei Teilabschnitten 8 bis 10 zusammengesetzt, wobei die Teilabschnitte über Spannbacken 11 miteinander verbunden sind. Ein erster Teilabschnitt 8 bildet einen Einzugbereich des Extruderzylinders 2. Ein Mittelbereich 9 und ein Endbereich 10 schließen in Förderrichtung der Förderschnecke 3 an den Einzugbereich 8 an. Austrittsseitig ist der Austrittsbereich 7 mit einer Austrittsdüse versehen. Die Austrittsdüse ist derart gestaltet, dass sich für das anstehende Endprodukt eine laminare Dehnströmung ergibt. Vorliegend ist die Austrittsdüse in Förderrichtung konisch verjüngt gestaltet. Der Mittelabschnitt 9 und der Endabschnitt 10 sind jeweils mit einer Temperiervorrichtung 19, 20 versehen, die jeweils zum Heizen und/oder Kühlen - je nach Steuerungsbedarf - eingesetzt werden kann. Der Einzugsbereich 8 ist in nicht näher dargestellter Weise mit einer Kühlvorrichtung versehen, die gewährleistet, dass eine Plastifizierung des Cagliata nicht bereits im Einzugbereich 8 erfolgt. Die Temperiervorrichtungen 19 und 20 nehmen eine Temperierung des Mittelabschnitts 9 bzw. des Endabschnitts 10 des Extruderzylinders 2 durch eine Temperierung des Zylindermantels mittels Flüssigkeit, insbesondere Wasser, vor. Für eine gute Wärmeübertragung sind sowohl der Mittelabschnitt 9 als auch der Endabschnitt 10 des Extruderzylinders 2 im Mantelbereich mit einer Rippenstruktur versehen. Durch die entsprechend gebildeten Kanäle der Rippenstruktur kann - je nach Temperierungswunsch - heißes oder kaltes Wasser geleitet werden.

Die Förderschnecke 3 wird durch einen zylindrischen Schneckenkern 12 sowie ein auf dem Schneckenkern 12 angeordnetes Schneckengewinde 13 gebildet. Der Schneckenkern 12 und das Schneckengewinde 13 erstrecken sich über die gesamte Länge des Extruderzylinders 2 und sind in einem einstufigen Herstellungsprozess, vorzugsweise durch Wirbeln, gemeinsam einteilig hergestellt. Die Lagerung der Förderschnecke 3 erfolgt benachbart zum Getriebe 4. Das Längen-/Durchmesserverhältnis L/d des Extruderzylinders 2 und der Förderschnecke 3 beträgt beim dargestellten Ausführungsbeispiel 18. Der Extruderzylinder 2 weist beim dargstellten Ausführungsbeispiel einen Zylinderraum mit einer Länge von 936mm und einem Durchmesser von 52mm auf. Dies ergibt das beschriebene Längen-/Durchmesserverhältnis von 18.

Der Zylinderraum des Extruderzylinders 2 ist über seine gesamte Länge mit wendelförmigen Nuten 15, 16 versehen. Dabei ist der den Einzugbereich bildende erste Abschnitt 8 mit wendelförmigen Nuten 15 versehen, die sich über die gesamte Länge dieses Zylinderabschnittes erstrecken. Die wendelförmigen Nuten 15 weisen beim dargestellten Ausführungsbeispiel etwa die gleiche Steigung auf wie das Schneckengewinde 13 der Förderschnecke 3. Die wendelförmigen Nuten 15 sind aber gegensinnig gerichtet zum Wendel- oder Drehsinn des Schneckengewindes 13 der Förderschnecke 3.

Auch der Mittelabschnitt 9 und der Endabschnitt 10 sind jeweils mit wendelförmig verlaufenden Nuten 16 versehen, wobei mehrere parallel zueinander verlaufende Nuten 16 im jeweiligen Zylinderabschnitt vorgesehen sind. Die Steigung dieser wendelförmigen Nuten 16 ist gegenüber der Steigung des Schneckengewindes 13 auf eine Längsachse der Schnecke bezogen kleiner. Auch die wendelförmigen Nuten 16 verlaufen gegensinnig zum Dreh- oder Wendelsinn des Schneckengewindes 13 der Förderschnecke 3.

Die einzugseitigen Nuten 15 weisen einen im Wesentlichen halbkreisförmigen Querschnitt auf und sind gegenüber den Querschnitten der Nuten 16 mit einer größeren Tiefe versehen. Die Querschnitte der wendelförmigen Nuten 16 des Mittelabschnittes 9 und des Endabschnittes 10 sind identisch zueinander gestaltet und weisen ebenfalls eine kreisbogenförmige Kontur - im Querschnitt gesehen - auf.

In Förderrichtung gesehen eingangsseitig des Mittelabschnittes 9 ist dem Extruderzylinder 2 eine Vorrichtung 17 zum Injizieren von Wasserdampf in den Zylinderraum zugeordnet. Hierzu ist der Mittelabschnitt 9 mit wenigstens einer entsprechenden Durchtrittsbohrung 21 versehen. Die Direktinjektion von Wasserdampf ermöglicht vor allem eine gute Aufheizung und Plastifizierung des durch den Einzugbereich zum Mittelabschnitt 9 geförderten Ausgangsmaterials. Zudem wird durch die Wasserdampfinjektion ein homogener Eintrag von Wasser in das Ausgangsmaterial und die plastifizierte Masse geschaffen. In Förderrichtung gesehen benachbart zu der Dampfinjektionsvorrichtung 17 ist eine Dosiervorrichtung 18 für Salz und/oder Gewürze und/oder andere Zutaten vorgesehen. Salz wird über die Dosiervorrichtung 18 vorzugsweise als Kochsalzlösung direkt dem Zylinderraum zugeführt. Die Dosiervorrichtung 18 weist hierzu ebenfalls wenigstens eine Durchtrittsöffnung 21 im Mittelabschnitt 9 des Extruderzylinders 2 auf. Salz und/oder Gewürze werden durch die Arbeit der Förderschnecke 3 in Verbindung mit den wendelförmigen Nuten 16 am Innenmantel des Mittelabschnittes 9 und des Endabschnittes 10 des Extruderzylinders 2 homogen in die Masse eingearbeitet und mit dieser vermischt. Die Nuten 16 bewirken gleichzeitig in Verbindung mit der Förderschnecke 3 eine Streckung der plastifizierten Masse. Über die beiden Temperiervorrichtungen 18 und 20 können gewünschte Temperaturen im Zylinderraum sowie gewünschte Temperaturen für die im Zylinderraum durch die Förderschnecke 3 geförderte Masse über den gesamten Mittelabschnitt 9 und den gesamten Endabschnitt 10 eingestellt werden. Auch der Endabschnitt 10 und der Austrittsbereich 7 sind mit jeweils wenigstens einer weiteren Durchtrittsbohrung 21 versehen. Alle Durchtrittsbohrungen 21 sind identisch gestaltet und können je nach Einsatzzweck neben dem Anschluss einer Dosiervorrichtung auch zum Einsetzen eines Druck- oder Temperatursensors dienen, um entsprechende Parameter im Zylinderraum überwachen zu können.

Zur Herstellung von Mozzarella mittels des Einschneckenextruders 1 wird Cagliata C als Ausgangsmaterial in gleichmäßiger Stückgröße über den Einführtrichter 6 dem Einzugbereich des ersten Abschnittes 8 des Extruderzylinders 2 zugeführt. Entsprechende Scherkräfte durch Drehung der Förderschnecke 3 in Verbindung mit den wendelförmigen Nuten 15 an der Zylinderwand des Zylinderraumes im ersten Abschnitt 8 zerkleinern das Cagliata-Ausgangsmaterial. Am Übergang zum Mittelabschnitt 9 wird dem Cagliata-Material durch Direktinjektion Wasserdampf zugeführt, der den Cagliata plastifiziert und gleichzeitig den Wasseranteil erhöht. Zusätzlich wird über die Dosiervorrichtung 18 die Kochsalzlösung zugeführt und mit der plastifizierten Käsemasse vermischt. Die Steuerung der Dampfinjektionsvorrichtung 17 sowie der Temperiervorrichtung 19 in Verbindung mit der Fördergeschwindigkeit der Förderschnecke ist so gewählt, dass im Mittelabschnitt 9 für die aufgeschmolzene Käsemasse ein Temperaturbereich von 72°C bis 75°C erreicht und für 15 bis 30 Sekunden aufrecht erhalten wird. Dies erfolgt im Wesentlichen durch die Erhitzung mittels der Wasserdampfinjektion. Hierdurch wird die Käsemasse einer Pasteurisation unterzogen. Anschließend erfolgt eine kurzzeitige weitere Erhitzung über einige Sekunden bis auf 85°C. Schließlich wird die plastifizierte Textur abgekühlt. Im Endabschnitt 10 erfolgt über die Temperiervorrichtung 20 eine Temperierung auf eine Temperatur zwischen 55°C und 65°C, wobei bevorzugt die dann erzielte Pasta-Filata-Textur am Austrittsbereich 7 mit einer Temperatur von 55°C aus der Austrittsdüse extrudiert werden soll. Die Austrittsdüse ist in Förderrichtung konisch verjüngt gestaltet und gewährleistet eine laminare Dehnströmung für die austretende Käsemasse. Auch die Temperiervorrichtung 20 wird hierzu entsprechend gesteuert bzw. geregelt. Zusätzlich zu der Durchmischung und Aufschmelzung der Käsemasse wird die Käsemasse über die wendelförmigen Nuten 16 und die Förderschnecke 3 in dem Mittelabschnitt 9 und dem Endabschnitt 10 gestreckt, wozu auch Scherkräfte der Förderschnecke 3 beitragen. Hierdurch wird die gewünschte filamentöse Struktur für den Mozzarella erreicht, es wird eine typische und hochwertige Pasta-Filata-Textur geschaffen. Nach dem Austritt aus der Austrittsdüse kann die Käsemasse (nicht dargestellt) direkt in eine hygienisch arbeitende Verpackungsmaschine gefördert werden. Dadurch kann eine Rekontamination des fertigen Produktes ausgeschlossen werden. Hierdurch ist eine kontinuierliche Herstellung von Mozzarella aus dem Ausgangsmaterial Cagliata erzielbar.

Beim dargestellten Ausführungsbeispiel wird mit einer Schneckendrehzahl von 30 U/min ein Ausstoß von 45 kg/h des Pasta-Filata-Käses erzielt.

Eine nicht näher dargestellte Steuer- und/oder Regeleinheit in Verbindung mit den entsprechenden Sensoren ermöglicht die gewünschte Steuerung und Regelung der einzelnen Prozessstufen innerhalb des Einschneckenextruders.

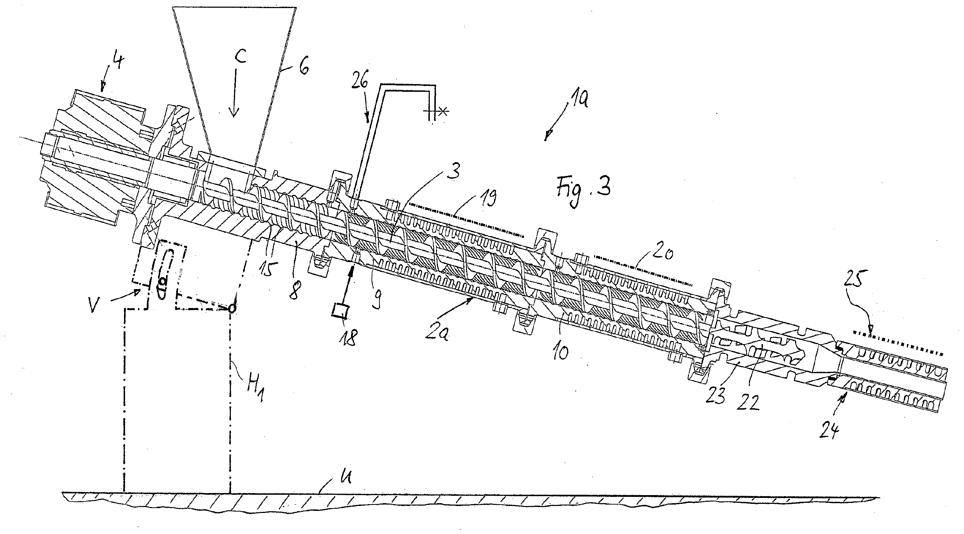

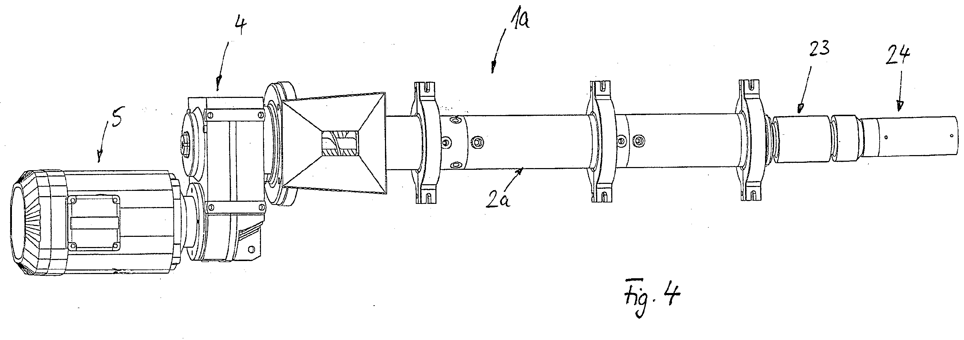

Der Einschneckenextruder 1a nach den Fig. 3 und 4 entspricht im Wesentlichen dem Einschneckenextruder 1 nach den Fig. 1 und 2. Auch der Einschneckenextruder 1a nach den Fig. 3 und 4 dient zur Herstellung von Mozzarella. Der Einschneckenextruder 1a nach den Fig. 3 und 4 ist in großen Bereichen identisch gestaltet zu dem Einschneckenextruder 1 nach den Fig. 1 und 2. Zur Vermeidung von Wiederholungen wird daher auf die Beschreibung zu den Fig. 1 und 2 verwiesen. Nachfolgend wird lediglich auf die Unterschiede des Einschneckenextruders 1a nach den Fig. 3 und 4 relativ zu dem Einschneckenextruder 1 nach den Fig. 1 und 2 verwiesen. Der Einschneckenextruder 1a ist durch eine Halterung H₁ relativ zu einem horizontalen Untergrund U geneigt gehalten, wobei im Gegensatz zur Halterung H nach Fig. 1 die Halterung H₁ zusätzlich mit einer Verstelleinrichtung V versehen ist, mittels der die Neigung des Einschneckenextruders 1a relativ zur Horizontalen verändert werden kann. Die Verstelleinrichtung V ist als Schwenkmechanik ausgeführt, wie anhand der Zeichnung erkennbar ist, und ist manuell einstellbar. Es ist auch möglich, der Verstelleinrichtung einen Stellantrieb zuzuordnen, um eine motorische Verstellung der Neigung des Einschneckenextruders 1a zur Horizontalen zu ermöglichen.

Wesentlich beim Einschneckenextruder 1a nach den Fig. 3 und 4 ist es, dass der Einschneckenextruder 1a gegenüber dem Einschneckenextruder 1 nach den Fig. 1 und 2 in Förderrichtung nach vorne verlängert ist. An den Teilabschnitt 10 des Extruderzylinders, der noch identisch gestaltet ist wie beim Einschneckenextruder 1 gemäß Fig. 1, schließt koaxial nach vorne ein Zylinderabschnitt 23 des Extruderzylinders an, in dem eine Dehnschnecke 22 angeordnet ist. Die Dehnschnecke 22 ist koaxial zur Förderschnecke 3 ausgerichtet und drehfest mit dieser verbunden. Die Dehnschnecke 22 weist einen Schneckenkern sowie verschiedene, radial nach außen abragende Leitelemente für den plastifizierten Materialstrang auf, die Strangteilmittel, Materialleitbereiche und Vereinigungsabschnitte im Sinne der Erfindung darstellen. Die vom Schneckenkern aus einstückig nach außen abragenden Leitelemente dienen zum Aufteilen des geförderten, plastifizierten Materialstrangs in Teilstränge, zum Verdrehen, Beschleunigen und Abbremsen der Teilstränge und zum Zusammenführen, Mischen und Homogenisieren dieser Teilstränge zu dem nach der Dehnstrecke 22 austretenden Materialstrang, der das Mozzarella-Endprodukt bildet. An den Zylinderabschnitt 23 schließt ein Kühlzylinderabschnitt 24 an, dem ein Temperierbereich 25 zugeordnet ist, um den aus dem Dehnschneckenabschnitt 22, 23 austretenden Mozzarellastrang auf die gewünschte Temperatur zu temperieren.

Oberseitig am Extruderzylinder 2a ist zu Beginn des den Mittelbereich 9 bildenden Teilabschnitts eine Überlaufvorrichtung 26 vorgesehen, die zum Abführen von Prozessflüssigkeit aus dem Zylinderraum des Extruderzylinders 2a dient. Die Überlaufvorrichtung 26 ist lediglich schematisch dargestellt. Die Überlaufvorrichtung 26 weist ein Stellelement zum Abschließen und Öffnen eines entsprechenden, die Überlaufvorrichtung 26 bildenden Überlaufstutzens auf. Abhängig von der eingestellten Neigung des Einschneckenextruders 1a relativ zur Horizontalen kann mittels der Überlaufvorrichtung 26 der Flüssigkeitsspiegel der im Zylinderraum des Extruderzylinders 2a befindlichen Prozessflüssigkeit gesteuert werden.

## Patentansprüche

1. Einschneckenextruder zum kontinuierlichen Fördern und Plastifizieren eines Ausgangsmaterials mit einer Schnecke, mit einem Extruderzylinder, der die Schnecke aufnimmt und - in Förderrichtung der Schnecke gesehen - eingangsseitig einen Einzugbereich sowie ausgangsseitig einen Austrittsbereich umfasst, sowie mit wenigstens einer Temperiereinrichtung, die wenigstens einem Teilabschnitt des Extruderzylinders zum Heizen oder Kühlen eines zugeordneten Zylinderraumes zugeordnet ist, wobei der Extruderzylinder (2) zumindest weitgehend über seine gesamte, die Schnecke (3) ummantelnde Länge mit über seine Innenmantelfläche erstreckten Nuten (16) versehen ist, **dadurch gekennzeichnet, dass** die Schnecke (3) in ihrer Schneckengeometrie derart gestaltet ist, dass das Ausgangsmaterial (C) in plastifiziertem Zustand zumindest weitgehend druckkonstant durch den Extruderzylinder (2) bis zum Austrittsbereich (7) gefördert wird, und dass an die Schnecke (3) ein mit der Schnecke (3) koaxialer und drehfester Dehnschneckenabschnitt anschließt, der wendelförmig über seinen Umfang verteilt mechanische Strangteilmittel zum Aufteilen des durch die Schnecke (3) geförderten, plastifizierten Materialstrangs in Teilstränge, sowie mechanische Materialleitbereiche zum Beschleunigen der Teilstränge, mechanische Materialleitbereiche zum Abbremsen der Teilstränge und mechanische Vereinigungsabschnitte umfasst, in denen die Teilstränge wieder zusammengeführt werden.

2. Einschneckenextruder nach Anspruch 1, **dadurch gekennzeichnet, dass** in Förderrichtung des Materialstrangs an den Dehnschneckenabschnitt ein Temperierabschnitt zum Temperieren, insbesondere zum Kühlen des von dem Dehnschneckenabschnitt geförderten Materialstrangs vorgesehen ist.

3. Einschneckenextruder nach einem der vorhergehenden Ansprüche, **dadurch gekennzeichnet, dass** die Schnecke durch einen Schneckenkern (12) sowie ein gleichmäßig über die Länge und den Umfang des Schneckenkerns (12) verteiltes Schneckengewinde (13) gebildet ist, das mit einem oder mehreren Schneckengängen versehen ist, wobei jeder Schneckengang bündig an die Innenmantelfläche des Extruderzylinders herangeführt ist.

4. Einschneckenextruder nach Anspruch 3, **dadurch gekennzeichnet, dass** der Schneckenkern über seine Länge konstant oder variabel gestaltet ist.

5. Einschneckenextruder nach Anspruch 1, **dadurch gekennzeichnet, dass** die Nuten (16) wendelförmig über die Innenmantelfläche des Extruderzylinders (2) verlaufen, wobei die Wendeln der Nuten (16) insbesondere gegensinnig zu einem Drehsinn der Schnecke (3) verlaufen.

6. Einschneckenextruder nach Anspruch 1, **dadurch gekennzeichnet, dass** mehrere parallel verlaufende Nuten an der Innenmantelfläche des Extruderzylinders (2) vorgesehen sind.

7. Einschneckenextruder nach Anspruch 5, **dadurch gekennzeichnet, dass** die Steigung der Nuten (16) unterschiedlich ist zu der Steigung des Schneckengewindes (13).

8. Einschneckenextruder nach einem der vorhergehenden Ansprüche, **dadurch gekennzeichnet, dass** die Nuten (16) jeweils einen gerundeten Querschnitt aufweisen.

9. Einschneckenextruder nach Anspruch 1, **dadurch gekennzeichnet, dass** die Schnecke (3), der Extruderzylinder (2), der Dehnschneckenabschnitt und die wenigstens eine Temperiereinrichtung (19, 20) derart gestaltet sind, dass sie zur Herstellung eines plastifizierten Lebensmittelproduktes, insbesondere eines Pasta-Filata-Käses, aus einer Protein-Fett-Matrix, insbesondere einem Cagliata-Ausgangsmaterial, einsetzbar sind.

10. Einschneckenextruder nach Anspruch 9, **dadurch gekennzeichnet, dass** eine Wendelsteigung sowie eine Anzahl der Nuten (16), eine Dimensionierung und eine Form der Nutquerschnitte sowie eine Gestaltung des Schneckenkerns (12) und eine Steigung und Gestaltung des Schneckengewindes (13) relativ zum Durchmesser des Zylinderraumes derart aufeinander abgestimmt sind, dass eine Scherung der Protein-Fett-Matrix, insbesondere des Cagliata-Ausgangsmaterials (C), sowie eine Mischung der plastifizierten Masse mit Wasser und Zutaten sowie eine Streckung der plastifizierten Masse zu einem plastifizierten Lebensmittelprodukt, insbesondere der Pasta-Filata-Textur, bei Beibehaltung eines im Wesentlichen konstanten Druckniveaus für die Masse während des Fördervorganges vom Einzugbereich bis zum Austrittsbereich erfolgt.

11. Einschneckenextruder nach wenigstens einem der vorhergehenden Ansprüche, **dadurch gekennzeichnet, dass** dem Extruderzylinder (2) eine Vorrichtung (17) zum Injizieren von Wasserdampf in einen Zylinderraum des Extruderzylinders (2) zugeordnet ist, und/oder dass dem Extruderzylinder (2) wenigstens eine Vorrichtung (18) zum Einbringen von Zutaten wie insbesondere von Salz und/oder Gewürzen, vorzugsweise in flüssigem, suspendiertem, emulgiertem oder gasförmigem Zustand, in den Zylinderraum zugeordnet ist, und/oder dass die Innenmantelfläche des Extruderzylinders (2) dehäsiv gestaltet ist, insbesondere durch eine Mikroverdichtung bearbeitet ist.

12. Einschneckenextruder nach Anspruch 1, **dadurch gekennzeichnet, dass** eine Halterung (H) für den Extruderzylinder (2) vorgesehen ist, die den Extruderzylinder (2) in einer Funktionsstellung zu einer Horizontalen (U) derart geneigt ausrichtet, dass der Einzugbereich höher liegt als der Austrittsbereich, und/oder dass dem Extruderzylinder (2a) eine Überlaufvorrichtung zum Abtrennen von Flüssigkeit aus dem Zylinderraum zugeordnet ist und/oder dass eine Austrittsdüse am Austrittsbereich (7) so gestaltet ist, dass sich für das austretende, plastifizierte Lebensmittelprodukt eine laminare Dehnströmung ergibt.

13. Einschneckenextruder nach Anspruch 11, **dadurch gekennzeichnet, dass** die Halterung (H) eine Verstelleinrichtung (V) zur Verstellung einer Neigung des Extruderzylinders (2a) zur Horizontalen aufweist.

14. Einschneckenextruder nach Anspruch 12 oder 13, **dadurch gekennzeichnet, dass** eine Querschnittsform der Nuten an der Innenmantelfläche des Extruderzylinders derart auf die geneigte Ausrichtung des Extruderzylinders abgestimmt ist, dass Reinigungsflüssigkeit bei einem Reinigungsvorgang des Einschneckenextruders aus den Nuten vollständig abfließt.

15. Verfahren zum Herstellen eines plastifizierten Lebensmittelproduktes, insbesondere eines Pasta-Filata-Käses, vorzugsweise Mozzarella, mittels eines Einschneckenextruders nach wenigstens einem der vorhergehenden Ansprüche, bei dem eine Protein-Fett-Matrix als Ausgangsprodukt, insbesondere ein Cagliata, in gleichmäßiger Stückgröße einem Einzugbereich (8) des Einschneckenextruders (1) zugeführt und in einen Zylinderraum des Extruderzylinders (2) gefördert wird, wobei die Protein-Fett-Matrix durch Wasserdampfinjektion plastifiziert wird und die plastifizierte Masse während der Förderung zu einem Austrittsbereich (7) mit einer Salzlösung gemischt und zu einer LebensmittelTextur, insbesondere einer Pasta-Filata-Textur, gestreckt wird, und wobei die Textur zum Austrittsbereich hin auf einen Temperaturbereich zwischen 55°C und 65°C temperiert und aus dem Extruderzylinder herausgefördert wird, **dadurch gekennzeichnet, dass** die Förderung der plastifizierten Masse und die Gestaltung der Lebensmittel-Textur über den gesamten Förderweg ab Plastifizierung bis zum Austrittsbereich (7) mit zumindest weitgehend konstantem Druck auf die Masse bzw. die Lebensmittel-Textur erfolgt, und dass die plastifizierte Masse als einzelner Materialstrang kontinuierlich gefördert und in einem Teilbereich des Förderwegs in mehrere Teilstränge aufgeteilt wird, dass die Teilstränge gedreht, beschleunigt und abgebremst werden, und dass die Teilstränge anschließend wieder zu einem gemeinsamen Materialstrang zusammengeführt und homogenisiert werden.

16. Verfahren nach Anspruch 15, **dadurch gekennzeichnet, dass** die Förderung des Materialstrangs und der Teilstränge in dem Teilbereich wendelförmig erfolgt.

17. Verfahren nach Anspruch 15 oder 16, **dadurch gekennzeichnet, dass** die plastifizierte Masse im Extruderzylinder (2) bei einem Temperaturbereich zwischen 72°C und 75°C über einen Zeitraum von 15 bis 30 Sekunden pasteurisiert wird.

## Claims

1. Single-screw extruder for continuous conveying and plasticizing of a starting material having a screw, having an extruder cylinder which receives the screw and - as seen in the conveying direction of the screw - comprises an inlet region on the input side and an outlet region on the output side, and having at least one temperature controlling device which is associated with at least one subsection of the extruder cylinder for heating or cooling of an associated cylinder space, wherein the extruder cylinder (2) is provided, at least largely, over its entire length sheathing the screw (3) with grooves (16) extending over the inner sheath surface of the cylinder, **characterized in that** the screw geometry of the screw (3) is configured such that the starting material (C) in a plasticized state is conveyed through the extruder cylinder (2) up to the outlet region (7) under an at least largely constant pressure, and **in that** adjacent to the screw (3) is an extensional screw section coaxial and rotationally fixed to the screw (3), which extensional screw section comprises, distributed in a spiral-shape over its circumference, mechanical strand separating means for dividing the plasticized material strand conveyed by the screw (3) into partial strands, and mechanical material guiding regions for accelerating the partial strands, mechanical material guiding regions for decelerating the partial strands and mechanical rejoining sections, wherein the partial strands are reunited again.

2. Single-screw extruder according to claim 1, **characterized in that** a temperature control section for temperature control, in particular for cooling of the material strand conveyed by the extensional screw section, is provided in the conveying direction of the material strand on the extensional screw section.

3. Single-screw extruder according to any of the preceding claims, **characterized in that** the screw is composed of a screw core (12) and a screw thread (13) distributed uniformly over the length and the circumference of the screw core (12), which screw thread is provided with one or more screw channels, wherein each screw channel is evenly brought close to the inner sheath surface of the extruder cylinder.

4. Single-screw extruder according to claim 3, **characterized in that** the screw core has a constant or variable configuration over its length.

5. Single-screw extruder according to claim 1, **characterized in that** the grooves (16) extend in a spiral shape over the inner sheath surface of the extruder cylinder (2), wherein the spirals of the grooves (16) extend in particular in a direction opposite to a rotational direction of the screw (3).

6. Single-screw extruder according to claim 1, **characterized in that** a plurality of grooves extending in parallel are provided on the inner sheath surface of the extruder cylinder (2).

7. Single-screw extruder according to claim 5, **characterized in that** a pitch of the grooves (16) differs from the pitch of the screw thread (13).

8. Single-screw extruder according to any of the preceding claims, **characterized in that** the grooves (16) each have a rounded cross section.

9. Single-screw extruder according to claim 1, **characterized in that** the screw (3), the extruder cylinder (2), the extensional screw section and the at least one temperature controlling device (19, 20) are configured to be applicable for producing a plasticized food product, in particular a pasta filata cheese, composed of a protein-fat matrix, in particular a Cagliata starting material.

10. Single-screw extruder according to claim 9, **characterized in that** a spiral pitch and a number of grooves (16), dimensioning and shape of the groove cross sections and configuration of the screw core (12) and a pitch and configuration of the screw thread (13) in relation to the diameter of the cylinder space are matched to one another such that shearing of the protein-fat matrix, in particular of the Cagliata starting material (C), and admixing of the plasticized matter with water and ingredients and drawing of the plasticized matter to a plasticized food product, in particular of pasta filata texture, is obtained while maintaining an essentially constant pressure level for the matter during the conveying procedure from the inlet region up to the outlet region.

11. Single-screw extruder according to at least one of the preceding claims, **characterized in that** a device (17) for injecting steam into a cylinder space of the extruder cylinder (2) is associated with the extruder cylinder (2), and/or **in that** at least one device (18) for introducing ingredients, like in particular salt and/or spices, preferably in a liquid, suspended, emulsified or gaseous state, into the cylinder space is associated with the extruder cylinder (2), and/or **in that** the inner sheath surface of the extruder cylinder (2) has a dehesive configuration, in particular is processed by micro-compaction.

12. Single-screw extruder according to claim 1, **characterized in that** a mounting (H) is provided for the extruder cylinder (2) to orient the extruder cylinder (2) in a functional position with an inclination in relation to a horizontal (U) such that the inlet region is on a higher level than the outlet region, and/or **in that** an overflow device for separating liquid from the cylinder space is associated with the extruder cylinder (2a), and/or **in that** an outlet die at the outlet region (7) is configured such that a laminar extensional flow is obtained for the discharged, plasticized food product.

13. Single-screw extruder according to claim 11, **characterized in that** the mounting (H) includes a readjusting device (V) for adjusting an inclination of the extruder cylinder (2a) in relation to the horizontal.

14. Single-screw extruder according to claim 12 or 13, **characterized in that** a cross sectional shape of the grooves on the inner sheath surface of the extruder cylinder is matched to the inclined orientation of the extruder cylinder such that cleaning liquid drains completely off the grooves during a cleaning procedure of the single-screw extruder.

15. Method for producing a plasticized food product, in particular a pasta filata cheese, preferably Mozzarella, by means of a single-screw extruder according to at least one of the preceding claims, wherein a protein-fat matrix as a starting material, in particular a Cagliata, is supplied to an inlet region (8) of the single-screw extruder (1) in pieces of uniform size and conveyed into a cylinder space of the extruder cylinder (2), wherein the protein-fat matrix is plasticized by steam injection and, during the conveying towards an outlet region (7), the plasticized matter is admixed with a salt solution and drawn to a food texture, in particular a pasta filata texture, and wherein the texture is temperature controlled to a temperature range between 55 °C and 65 °C towards the outlet region and conveyed out of the extruder cylinder, **characterized in that** the conveying of the plasticized matter and shaping of the food texture is performed over the entire conveying path from plasticizing up to the outlet region (7) under an at least largely constant pressure on the matter and the food texture, respectively, and **in that** the plasticized matter is continuously conveyed in a single material strand and divided into multiple partial strands in a subsection of the conveying path, **in that** the partial strands are twisted, accelerated and decelerated, and **in that** subsequently the partial strands are reunited to a common material strand and homogenized.

16. Method according to claim 15, **characterized in that** said conveying of the material strand and the partial strands in the subsection is in a spiral shape.

17. Method according to claim 15 or 16, **characterized in that** the plasticized matter is pasteurized in the extruder cylinder (2) in a temperature range between 72 °C and 75 °C for a time period of 15 to 30 seconds.

## Revendications

1. Extrudeuse monovis pour convoyer et plastifier un matériel de départ en continu avec une vis, avec un cylindre d'extrudeuse qui est destiné à recevoir la vis et - en vue dans la direction de convoyage de la vis - comprend une région d'entrée sur le côté d'arrivée et une région de décharge sur le côté de sortie, ainsi qu'avec au moins un dispositif de régulation de température, ledit dispositif associé à au moins une sous-section du cylindre d'extrudeuse pour le chauffage ou le refroidissement d'un espace de cylindre associé, dans lequel le cylindre d'extrudeuse (2) est fourni, au moins en grande partie, sur toute sa longueur enveloppant la vis (3) de rainures (16) s'étendant sur sa surface d'enveloppe intérieure, **caractérisée en ce que** la géométrie de vis de la vis (3) est conçue de manière à ce que le matériel de départ (C) dans un état plastifié soit convoyé à travers le cylindre d'extrudeuse (2) jusqu'à la région de décharge (7) sous une pression constante, au moins en grande partie, et **en ce que** suivant la vis (3) est prévue une section de vis extensionnelle, coaxiale et solidaire en rotation par rapport à la vis (3), ladite section comprenant, répartis sur son pourtour en forme de spirale, des moyens mécaniques de séparation de fil pour diviser le fil de matériel plastifié, convoyé par la vis (3), en fils partiels ainsi que des parties mécaniques de guidage de matériel pour accélérer les fils partiels, des parties mécaniques de guidage de matériel pour décélérer les fils partiels et des sections de conjugaison mécaniques, dans lesquelles les fils partiels soient réunis.

2. Extrudeuse monovis selon la revendication 1, **caractérisée en ce qu'**une section de régulation de température pour réguler la température, en particulier pour le refroidissement du fil de matériel convoyé par la section de vis extensionnelle, est prévue dans la direction de convoyage du fil de matériel à la section de vis extensionnelle.

3. Extrudeuse monovis selon l'une quelconque des revendications précédentes, **caractérisée en ce que** la vis est composée d'un noyau de vis (12) ainsi que d'un filetage de vis (13) réparti uniformément le long de la longueur et autour du pourtour du noyau de vis (12), le filetage étant prévu d'un ou plusieurs canaux de vis, dans lequel chacun des canaux de vis est approché joint franc à la surface d'enveloppe intérieure du cylindre d'extrudeuse.

4. Extrudeuse monovis selon la revendication 3, **caractérisée en ce que** le noyau de vis présente une configuration constante ou variable le long de sa longueur.

5. Extrudeuse monovis selon la revendication 1, **caractérisée en ce que** les rainures (16) s'étendent en spirale sur la surface d'enveloppe intérieure du cylindre d'extrudeuse (2), les spirales des rainures (16) s'étendant en particulier en sens opposée par rapport à un sens de rotation de la vis (3).

6. Extrudeuse monovis selon la revendication 1, **caractérisée en ce que** plusieurs rainures s'étendant en parallèle sont prévues sur la surface d'enveloppe intérieure du cylindre d'extrudeuse (2).

7. Extrudeuse monovis selon la revendication 5, **caractérisée en ce que** le pas des rainures (16) est différent du pas de filetage de vis (13).

8. Extrudeuse monovis selon l'une quelconque des revendications précédentes, **caractérisée en ce que** les rainures (16) présentent chacun une coupe transversale arrondie.

9. Extrudeuse monovis selon la revendication 1, **caractérisée en ce que** la vis (3), le cylindre d'extrudeuse (2), la section de vis extensionnelle et l'au moins un dispositif de régulation de température (19, 20) sont conçus de telle sorte qu'ils sont utilisables pour fabriquer un produit alimentaire plastifié, en particulier un fromage du type pasta-filata, à partir d'une matrice de protéine-graisse, en particulier un matériel de départ du type Cagliata.

10. Extrudeuse monovis selon la revendication 9, **caractérisée en ce qu'**un pas de spirale ainsi qu'un nombre de rainures (16), un dimensionnement et une forme en coupe transversale des rainures ainsi qu'une configuration du noyau de vis (12) et un pas et une configuration du filetage de vis (13) par rapport au diamètre de l'espace de cylindre sont accordés les uns aux autres de telle manière qu'un cisaillement de la matrice de protéine-graisse, en particulier du matériel de départ du type Cagliata (C), ainsi qu'un mélange de la masse plastifiée avec de l'eau et des ingrédients ainsi qu'un étirement de la masse plastifiée pour obtenir un produit alimentaire plastifié, en particulier de texture du type pasta-filata, se fait tout en maintenant un niveau de pression essentiellement constant pour la masse pendant la procédure de convoyage de la région d'entrée jusqu'à la région de décharge.

11. Extrudeuse monovis selon au moins une des revendications précédentes, **caractérisée en ce qu'**un dispositif (17) pour injecter de la vapeur d'eau dans un espace de cylindre du cylindre d'extrudeuse (2) est associé au cylindre d'extrudeuse (2), et/ou **en ce qu'**au moins un dispositif (18) pour introduire des ingrédients, en particulier du sel et/ou des épices, de préférence à l'état liquide, suspendu, émulsionné ou gazeux, dans l'espace de cylindre est associé au cylindre d'extrudeuse (2), et/ou **en ce que** la surface d'enveloppe intérieure du cylindre d'extrudeuse (2) présente une configuration déhésive, en particulier usiné par micro-compactage.

12. Extrudeuse monovis selon la revendication 1, **caractérisée en ce qu'**un support (H) est prévu pour le cylindre d'extrudeuse (2) pour orienter le cylindre d'extrudeuse (2) en position fonctionnelle avec une inclinaison par rapport à une horizontale (U) de telle manière que la région d'entrée se situe plus élevée que la région de décharge, et/ou **en ce qu'**un dispositif de débordement pour séparer du liquide de l'espace de cylindre est associé au cylindre d'extrudeuse (2a), et/ou **en ce qu'**une buse de décharge dans la région de décharge (7) présente une configuration de telle sorte qu'un écoulement extensionnel laminaire s'ensuit pour le produit alimentaire plastifié de décharge.

13. Extrudeuse monovis selon la revendication 11, **caractérisée en ce que** le support (H) présente un dispositif de réglage (V) pour régler une inclinaison du cylindre d'extrudeuse (2a) par rapport à la horizontale.

14. Extrudeuse monovis selon la revendication 12 ou 13, **caractérisée en ce qu'**une forme en coupe transversale des rainures sur la surface d'enveloppe intérieure du cylindre d'extrudeuse est accordée à l'orientation inclinée du cylindre d'extrudeuse de telle manière que liquide de nettoyage s'écoule complètement des rainures pendant une procédure de nettoyage de la extrudeuse monovis.

15. Procédé pour fabriquer un produit alimentaire plastifié, en particulier un fromage du type pasta-filata, de préférence Mozzarella, par le moyen d'une extrudeuse monovis selon au moins une des revendications précédentes, dans lequel comme produit de départ une matrice de protéine-graisse, en particulier un matériel de départ du type Cagliata, soit amené dans une région d'entrée (8) de la extrudeuse monovis (1) en morceaux de taille uniforme et convoyé vers un espace de cylindre du cylindre d'extrudeuse (2), dans lequel la matrice de protéine-graisse subit plastification par injection de vapeur d'eau et la masse plastifiée subit mélange avec une solution saline et étirement pour obtenir une texture alimentaire, en particulier une texture du type pasta-filata, pendant le convoyage vers une région de décharge (7), et dans lequel la texture subit une régulation de température à une plage de température entre 55 °C et 65 °C vers la région de décharge et convoyage de sortie du cylindre d'extrudeuse, **caractérisé en ce que** le convoyage de la masse plastifiée et la configuration de la texture alimentaire se fait, le long de toute la voie de convoyage, à partir de la plastification jusqu'à la région de décharge (7) avec une pression constante, au moins en grande partie, sur la masse ou bien la texture alimentaire, et **en ce que** la masse plastifiée soit convoyée en continu sous forme d'un fil de matériel unique et divisé en plusieurs fils partiels dans une sous-section de la voie de convoyage, **en ce que** les fils partiels subirent tournage, accélération et décélération, et **en ce qu'**ensuite les fils partiels subirent réunion en un fil de matériel commun et homogénéisation.

16. Procédé selon la revendication 15, **caractérisé en ce que** le convoyage du fil de matériel et des fils partiels s'effectue en spirale dans ladite sous-section.

17. Procédé selon l'une des revendications 15 ou 16, **caractérisé en ce que** la masse plastifiée dans le cylindre d'extrudeuse (2) subit pasteurisation à une plage de température entre 72 °C et 75 °C pour une durée de 15 à 30 secondes.
